# EUROPEAN PATENT SPECIFICATION

(11) **EP 2 628 412 B1**
(45) Date of publication and mention of the grant of the patent: **28.01.2015**
(21) Application number: 12155875.3
(22) Date of filing: 17.02.2012
(51) Int. Cl.: A47C 7/00, F16B 12/12, A61G 5/12

(54) **Furniture element**
Möbelelement
Élément de mobilier

(43) Date of publication of application: 21.08.2013
(73) Proprietor: Vital Base AS, 6060 Hareid (NO)
(72) Inventor: Furnes, John Rune, DK-8700 Horsens (DK)
(74) Representative: Nikolov, Nikolay Dontchev

(56) References cited:
- EP-A1- 2 072 713
- WO-A1-02/01018
- WO-A1-2011/145193
- CH-A5- 568 737
- FR-A- 1 231 465

## Description

The present invention relates to furniture element comprising two parts or portions and an adjustable fixation and locking means 4 having a sliding hinge, to be used or utilized in furniture and/or human necessity products, such as e.g. different types of chairs, sofas, wheelchairs, etc.

### Background of the invention

From US 4,730,842 it is well known to use Velcro^{™} to fasten, in a wheel-chair, two furniture parts together. In the wheelchair described in this patent publication a cushion is fastened to a seat portion by means of a pair of overlapping flexible supports having Velcro^{™} material thereon for joining the supports of varying degrees of overlap.

JP 2003153764 A relates to a cushion providing for retaining a sitting position of a wheelchair that does not give pain to the waist of a person sitting on the wheelchair and prevents the person from falling sideways and stabilizes the sitting position of the person. The cushion for retaining the sitting position is mounted to the backrest and the side plate portions of the wheelchair that can be provided with a chair cover. The cushion is made up of a waist pad removably mounted to the backrest portion, butting and retaining the waist of the sitting person, and a pair of side pads removably mounted to the side plates, butting and retaining the sides of the sitting person. The waist pad is stored in a cover, and Velcro^{™} fasteners, provided in the cover, are connected to corresponding Velcro^{™} fasteners provided in the backrest portion of the wheelchair, wherein the waist pad is mounted on the backrest portion. The side pads are stored in covers, and Velcro^{™} fasteners, provided in the covers, are connected to corresponding Velcro^{™} fasteners provided in the side plates of the wheelchair, wherein the side pads are mounted on the side plates.

WO 2009/031875 A1 teaches a multi-functional system of blocks in a multi-functional furniture product comprising a plurality of structural components or parts provided with strips of Velcro^{™} and thus enabling the same to be easily converted to produce different furniture configurations.

Another example a furniture element is disclosed in WO 2011/145193 A.

In other alternatives for connecting of two parts bolts, nuts, screws, clips, clamps, telescopic or ordinary arm elements, plywood plates, brackets, globe or toggle joints, or the like, are being used. If some of them could be adjusted, usually tools are required or needed.

Most of the known fixation or locking means for two parts or portions have several disadvantages, wherein some do not allow to be adjusted in relation to each other, others that are adjustable do not have a firm and good grasp or fixation in relation to each other and can easily be loosened up or be disconnected from each other or be movable in connected or fixed position, and another group thereof can easily break. Of course there are also some having any possible combination of the above-mentioned disadvantages and problems.

The present inventions solved these disadvantages and problems.

### Summary of the invention

It is an object of the present invention to provide a furniture element having two parts or portions and an adjustable fixation and locking means, producing or creating a non-step-wise and/or progressively adjustable regulation of said two parts or portions in relation to each other.

Another object of the present invention is to provide a furniture element having two parts or portions and an adjustable fixation locking means and, providing for a good and firm connection when the two parts or portions are in one of many fixed or connected positions.

Yet another object of the present invention is to provide a furniture element having two parts or portions and an adjustable fixation locking means and, providing for a sub stantially rigid and solid connection when the two parts or portions are in one of many fixed or connected positions.

It is a further object of the present invention to provide a furniture element having two parts or portions and an adjustable fixation locking means and, that is easy to adjust without any need for tools or other parts.

This is obtained by the independent claims according to the present invention.

Additional features of the invention are given in the dependent claims.

### Short description of the drawings

Fig. 1A-1B show radial cross-sections of one embodiment of an adjustable fixation and locking means for two parts or portions;
Fig. 2A-2D show radial cross-sections of different positions of the fixation and locking means according to the embodiment in fig. 1A-1B;
Fig. 3A-3C show radial cross-sections of different embodiments the fixation and locking means according to the present invention;
Fig. 4A-4D show in detail and in perspective different positions of two parts or portions incorporating the fixation and locking means according to the present invention;
Fig. 5A-5E show in perspective different positions of the two parts or portions, one base and at least one adjustable portion, incorporating the fixation and locking means according to the present invention; and
Fig. 6A-6B show two different embodiments of the present invention.

### Detailed description of the invention

The present invention relates to a furniture element having two parts or portions and an adjustable fixation and locking means having a sliding hinge means.

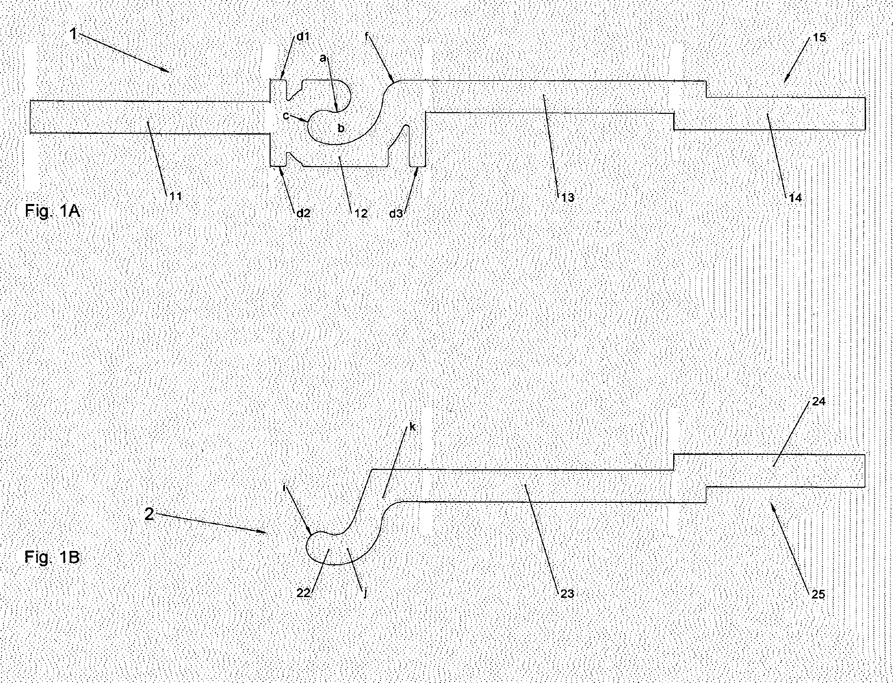

Fig. 1A and 1B show radial cross-sections of one embodiment of an adjustable fixation and locking means for two parts or portions 111, 222 (e.g. a base and an adjustable portion) by use of sliding hinge means. The fixation and locking means comprises two profiles 1 and 2: one longitudinal base profile 1, shown in detail in fig. 1A, comprising a longitudinal female locking part or section 12 connected, at least in one of its ends, to at least one longitudinal plate part or section 11, 13; and one adjustable longitudinal profile 2, shown in detail in fig. 1B, comprising a longitudinal male locking part or section 22 connected, at one end, to a longitudinal plate part or section 23. The longitudinal female locking part or section 12 and the longitudinal male locking part or section 22 define the sliding hinge means 50.

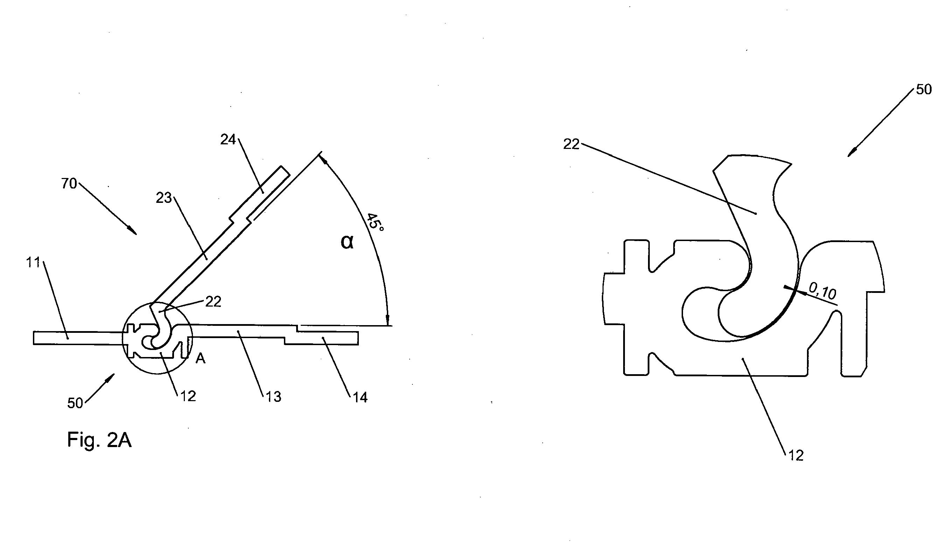

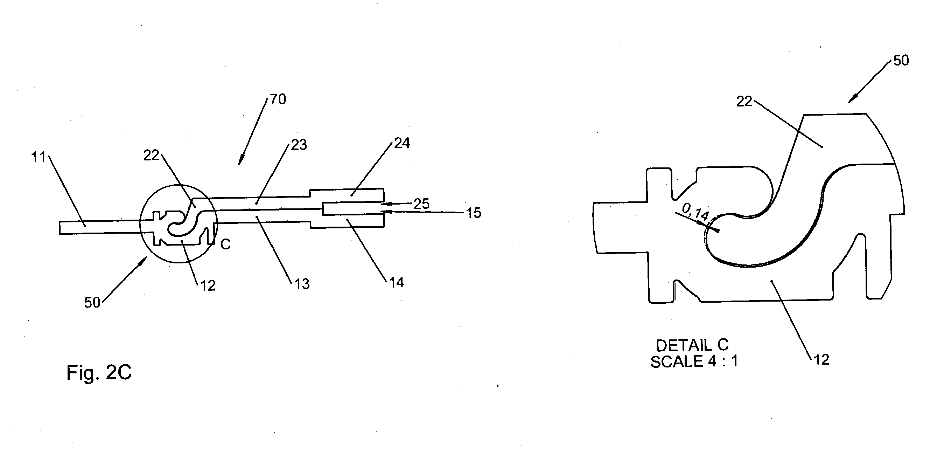

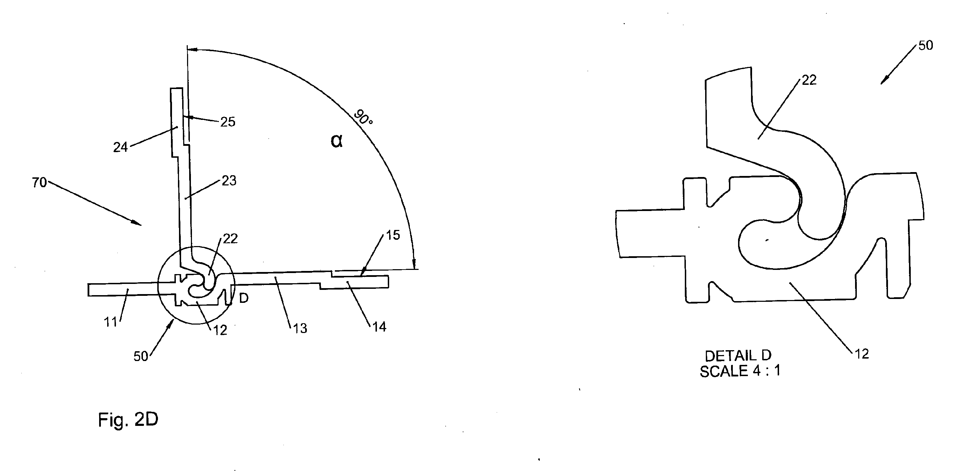

The fixation and locking means has three positions: a locked (shown e.g. in fig. 2C), a loose or sliding (shown e.g. in fig. 2A) and an open (shown e.g. in fig. 2D) position.

According to one embodiment of the invention, as in fig. 1A, the longitudinal female locking part or section 12 is a groove or recess, b, having a radial cross-section with a substantially J-shape or a shape substantially being in the form of a lower part of a hook. The groove or recess, b, has a bottom part, c, and a top bottom part, a.

According to the above-mentioned embodiment of the invention, as in fig. 1B, the longitudinal male locking part or section 22 is a tongue having a radial cross-section with a shape substantially corresponding to the shape of the longitudinal female locking part or section 12 and geometrically fittable therein. The tongue has a base part, k, a hooked part, j, and a top or end part, i.

It is possible for the longitudinal plate parts or sections 13, 23 of the longitudinal profiles 1, 2, that are facing each other, to have arranged on their ends that are opposite to the sliding hinge means 50, a recessed part or section 14, 24 providing for sufficient room or space 15, 25 for rooming an additional fastening means 30 that is being easily fastened or unfastened, preferably without the necessity of any tool or tools. The additional fastening means 30 can be, and is not limited only thereto, at least one of: Velcro^{™}, zipper, clamps, clips, or the like. What is important with the additional fastening means 30 is the function to facilitate easy fastening and/or unfastening of the two parts or portions 111, 222, preferably without the necessity of any tool or tools. Of course screws, bolts and nuts could be used, but then in this embodiment it is most possible that tool(s) will be needed or necessary in order to change to different positions of the adjustable part 222 in relation to the base part 111.

According to the invention the each other facing plate parts or sections 13, 23 (possibly 14, 24) can be all shaped or arranged in such a way that the additional fastening means 30 (e.g. Velcro^{™}) are arranged along the entire longitudinal direction for each respective profile 1, 2 or part / portion 111, 222 and at least onto some or onto the entire radial width of the respective each other facing plate part or section 13, 23 (possibly 14, 24). In this case parts 14, 24 can be regarded just as extensions of parts 13, 23, in other words parts 13 and 14, respectively parts 23, 24, will be just one longer part.

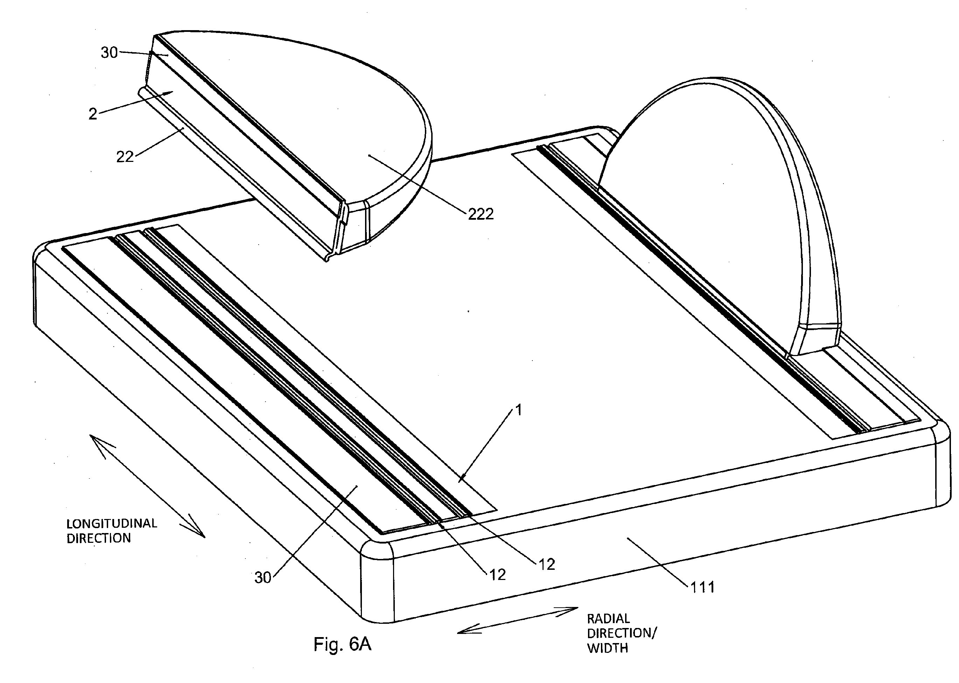

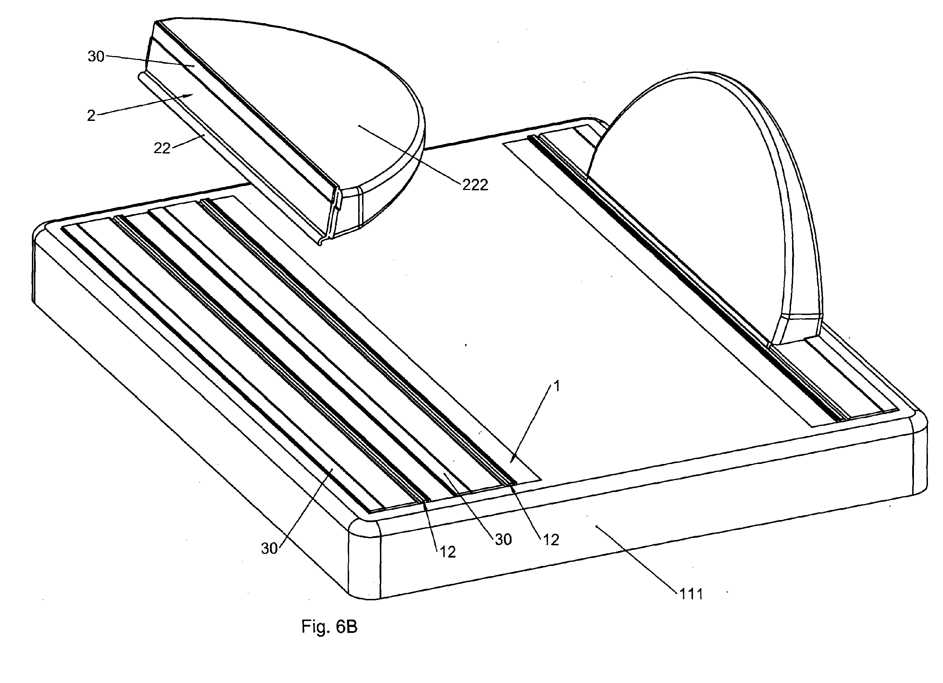

According to yet another embodiments of the invention, shown in fig. 6A-6B, one longitudinal base profile 1 for the base part or portion 111 can be supplied with two or more longitudinal female locking parts or sections 12, so that, in addition to the non-stepwise and/or progressively adjustable or movable or slidable function in the longitudinal direction, the adjustable part or portion 222 will have a stepwise adjustable function in the radial direction. In addition and as mentioned before, the additional fastening means 30 (e.g. Velcro^{™}) are arranged along the entire longitudinal direction for the base profile 1 or portion 111 and onto the entire radial width of at least one of the visible surfaces or faces of the longitudinal base plate parts or sections (fig. 6A). As shown in fig. 6B, several of the visible surfaces or faces of the longitudinal base plate parts or sections can be adapted for two or more additional fastening means 30 (e.g. Velcro^{™}) onto at least some or the entire radial width thereof. For example, when the locking parts or sections 12 of the longitudinal base profile 1 for the base part or portion 111 are substantially close to each other in relation to the width of the adjustable profile 2 or the adjustable part or portion 222, it would be sufficient to have the additional fastening means 30 (e.g. Velcro^{™}) arranged along the entire longitudinal direction for the base profile 1 or portion 111 and onto the entire radial width of only one of the visible surfaces or faces of the longitudinal base plate parts or sections, in this case the surface having the biggest surface area and being on the left side in fig. 6A. However, if the locking parts or sections 12 of the longitudinal base profile 1 for the base part or portion 111 are arranged with a certain distance between each other in comparison with the width of the adjustable profile 2 or the adjustable part or portion 222, then it would be necessary to arrange extra additional fastening means 30 onto the visible surface or face of the longitudinal base plate part or section being situated between the locking parts or sections 12, as it is shown in fig. 6B.

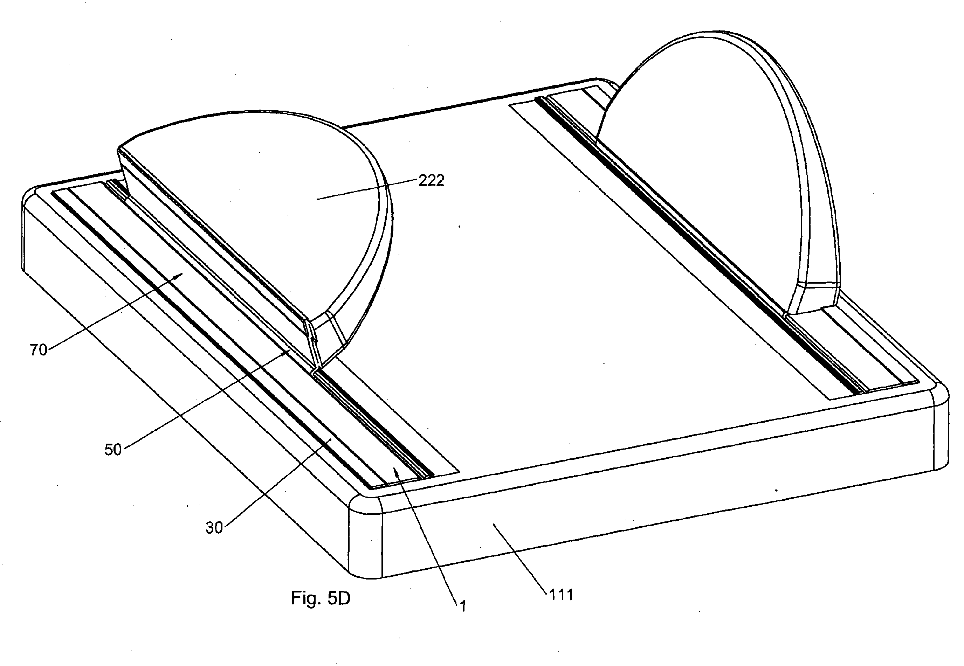

According to a further embodiment of the invention the base part or portion 111 can be supplied with two or more longitudinal base profiles 1, so that two or more adjustable parts or portions 222 can be mounted or arranged onto one base part or portion 111 (see fig. 5D).

According to yet another further embodiment of the invention the female and male longitudinal profiles 1, 2 can be switched in relation to the base and the adjustable parts or portions 111, 222, so that the female longitudinal profile 1 comprising the female locking part or section 12 can be arranged on(to) the adjustable part or portion 222, and the male longitudinal profile 2 comprising the male locking part or section 22 can be arranged on(to) the base part or portion 111.

In addition, at least one of the longitudinal profiles 1, 2 can further comprise at least one stress-resisting or reinforcement portion d1, d2, d3 arranged in the connection area between the locking part or section 12, 22 and the longitudinal plate part or section 11, 13, 23, wherein said at least one stress-resisting or reinforcement portion d1, d2, d3 is having a raised area or portion d1, d2, d3 on at least one side of the longitudinal plate part or section 11, 13, 23, thus providing for the stability and rigidness of the longitudinal profiles 1, 2. As shown in fig. 1A, the longitudinal plate part or section 11 has two stress-resisting or reinforcement portions d1, d2, one on each side in the connection area to the longitudinal female locking part or section 12, while the other longitudinal plate part or section 13, which is one part of the facing ones, has only one stress-resisting or reinforcement portion d3 in the connection area to the longitudinal female locking part or section 12, wherein the other side, f, is rounded. According to different embodiments, the stress-resisting or reinforcement portions d1, d2, d3, etc. can have substantially quadrangular / rigid or substantially rounded shapes or forms or edges, wherein said shapes or forms or edges can be calculated and/or chosen depending on the stress or tension level in each connection area.

As shown in fig. 2A-2D, the locked, loose or sliding and open positions for the adjustable fixation and locking means 70 can be defined by the angle, alpha / α, formed between the plate parts or sections 13, 23 of the longitudinal profiles 1, 2, that are facing each other, where the center for the angle is defined by the connected female and male locking parts or sections 12, 22, in other words the center defined by the sliding hinge means 50.

In the adjustable fixation and locking means 70, the locked position, shown in fig. 2C, is defined when the angle, alpha / α, is substantially about 0 degree. The loose or sliding position, shown in fig. 2A, is defined when the angle, alpha / α, is substantially from about 0 and to about 45 degrees. The open position, shown in fig. 2D, is defined when the angle, alpha / α, is substantially bigger or greater than about 45 degrees, in this case the angle, alpha / α, is about 90 degrees.

According to one embodiment of the invention, the male locking part or section 22 can be made slightly smaller than the female locking part or section 12 with a negative thickness margin of between about 0,1 and about 0,3 mm, thus facilitating good and easy longitudinal slidability or movability of the adjustable longitudinal profile 2 in relation to the base longitudinal profile 1, thus providing for good and easy non-stepwise and/or progressively adjustable regulation of said two parts or portions 111, 222 in relation to each other.

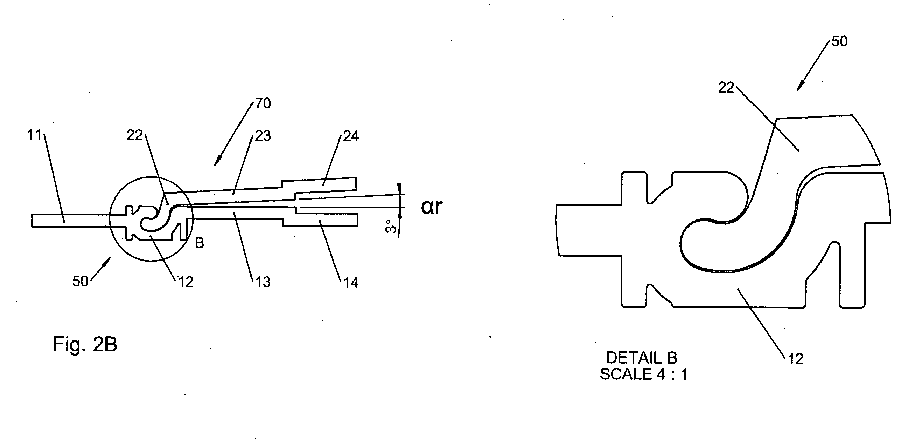

According to another embodiment of the invention, the top or end part, i, of the male locking part or section 22 can be made slightly higher than the corresponding top bottom part, a, of the female locking part or section 12 with a positive margin of between about 0,1 and about 0,3 mm, thus providing for the firm connection between the longitudinal profiles 1, 2 when in locked position (see fig. 1A-1B and fig. 2B-2C). When the each other facing longitudinal plate parts or sections 13, 23 of the longitudinal profiles 1, 2 are not strained e.g. by the additional fastening means 30 there will be provided a very small relaxing angle, alphaᵣ/αᵣ, from about 0,1 to about 5 degrees depending on the size of above-mentioned positive margin for the top or end part, i, of the male locking part or section 22 in relation to the top bottom part, a, of the female locking part or section 12, wherein the relaxing angle, alphaᵣ / αᵣ, is about 3 degrees in the embodiment shown in fig. 2B.

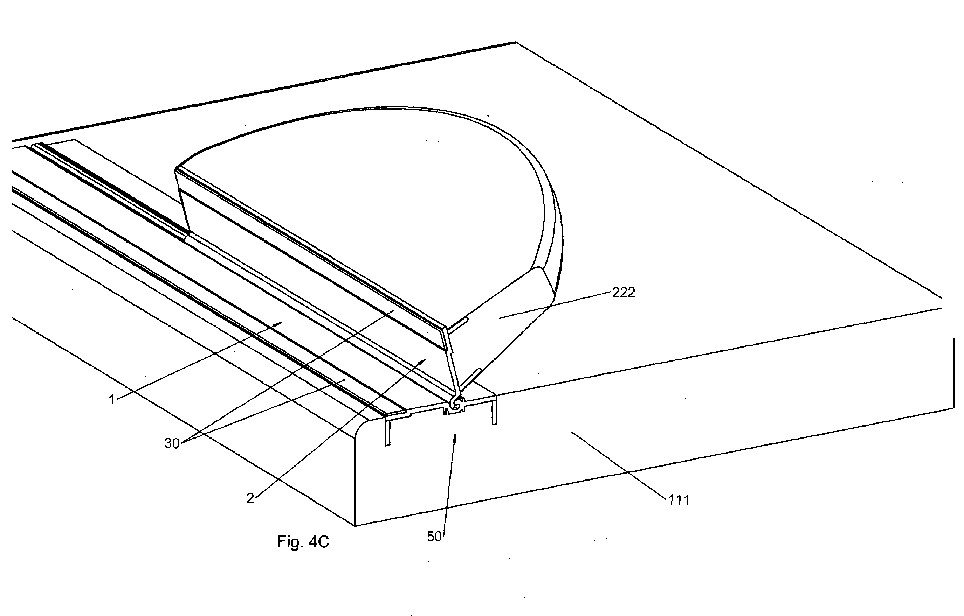

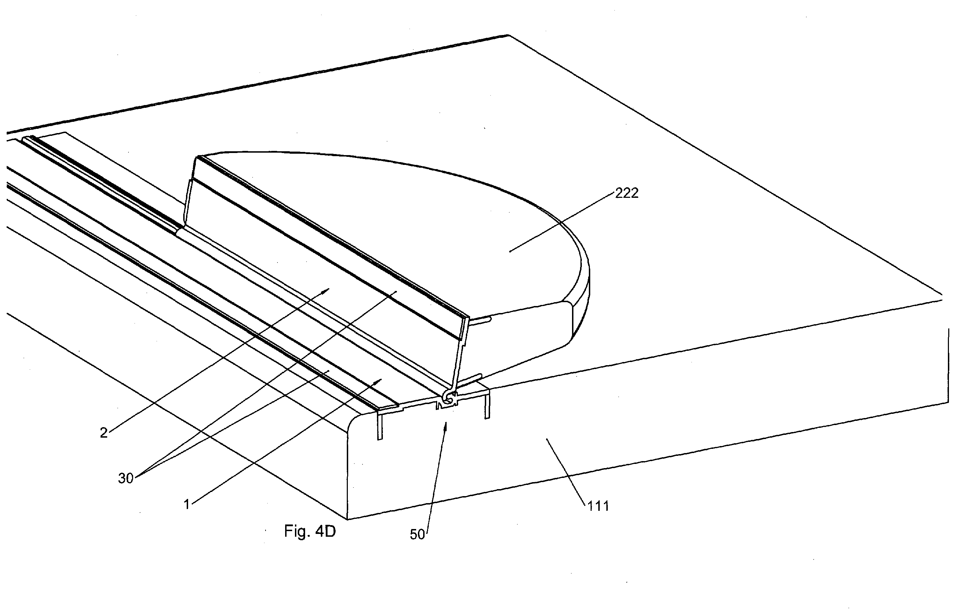

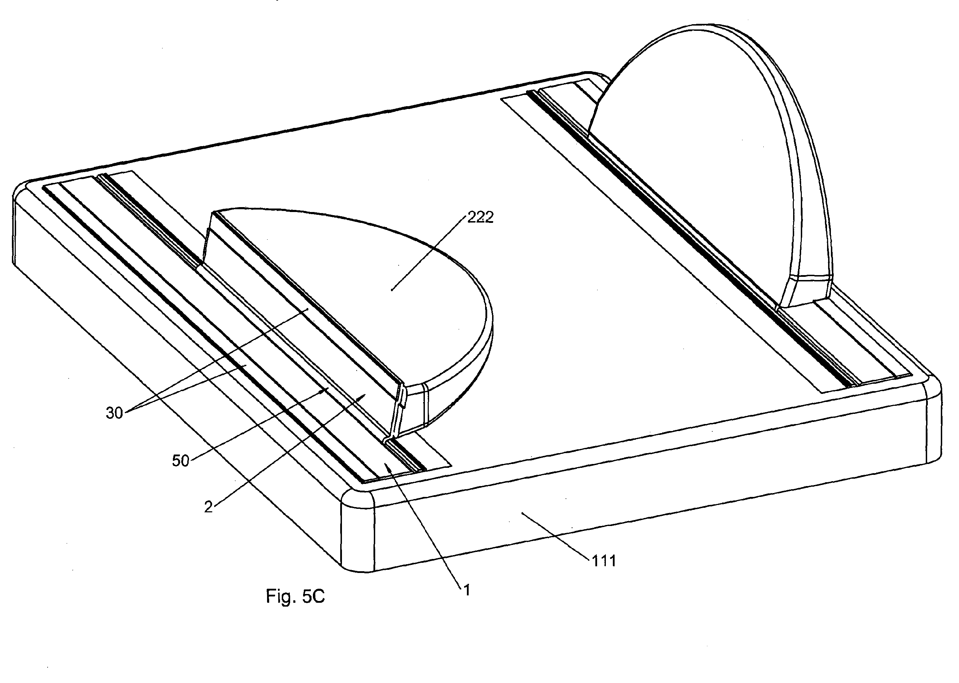

The longitudinal profiles 1, 2 can be arranged into or onto said two parts or portions 111, 222 e.g. by embedding or casting or moulding or stapling or gluing or screwing or the like, so that with regard to the longitudinal base profile 1 only one face or surface of said at least one longitudinal plate part or section 11, 13 and at least the entry of the longitudinal female locking part or section 12 will be visible; and with regard to the adjustable longitudinal profile 2 only one face or surface of the longitudinal plate part or section 23 and the longitudinal male locking part or section 22 will be visible. See for example fig. 4C, 4D, 5C and 5D.

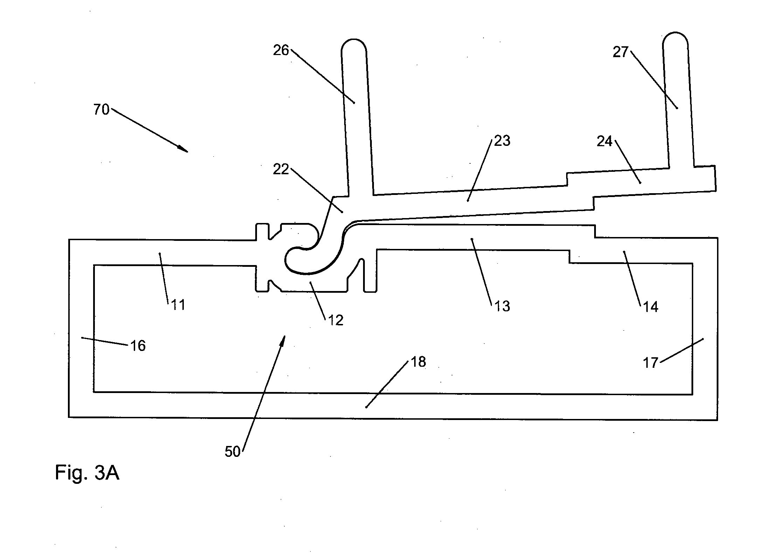

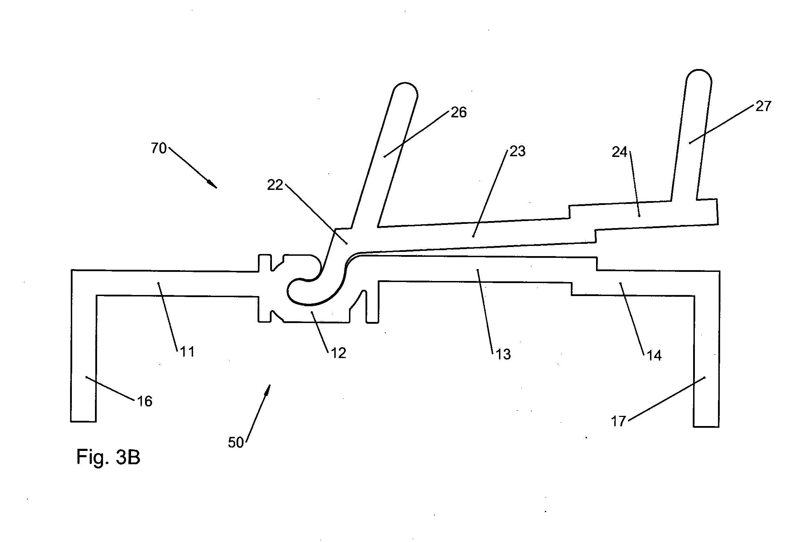

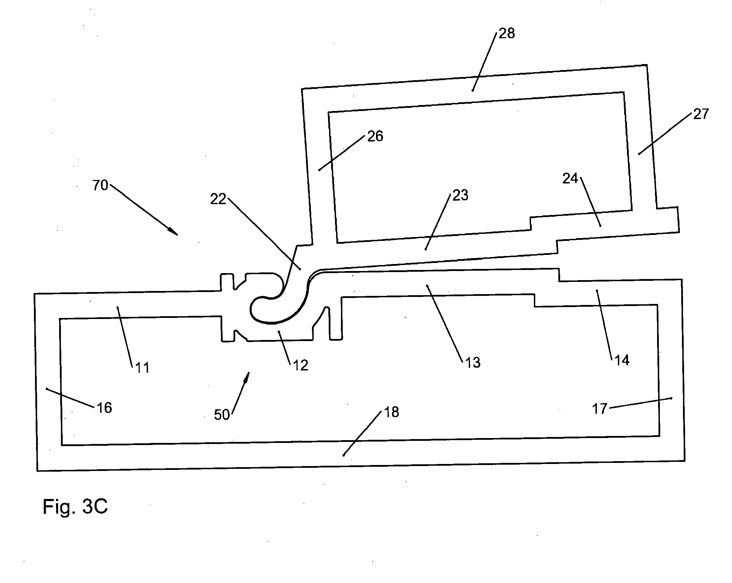

Fig. 3A-3C show radial cross-sections of different embodiments the fixation and locking means 70 according to the present invention, wherein one or both of the longitudinal profiles 1, 2 can further comprise at least one supporting part or section 16, 17, 26, 27 being connected to and substantially perpendicular to (e.g. fig. 3A and 3C) or having at least one predetermined angle (e.g. fig. 3B) with regard to at least one longitudinal plate part or section 11, 13, 23 (possibly 14, 24), thus providing for the stability and rigidness of the longitudinal profiles 1, 2 for said two parts or portions 111, 222. Said at least one predetermined angle for said at least one supporting part or section 16, 17, 26, 27 can be determined with regard to the respective form or shape of the respective part or portion 111, 222. In addition, according to different embodiments (e.g. fig. 3A and 3C), at least one additional supporting part or section 18, 28 can be connected to said at least one supporting part or section 16, 17, 26, 27 forming thus a closed loop (see: i) 11, 12, 13, possibly 14, 17, 18, 16, and ii) 23, 24, 27, 28, 26 in fig. 3A and 3C), thus providing for the stability and rigidness of the longitudinal profiles 1, 2 for said two parts or portions 111, 222.

The two parts or portions 111, 222 can be different furniture and/or human necessity (e.g. for wheelchairs) elements of such latter products. According to one embodiment of the invention the base part or portion 111 can be a back part or backrest and the adjustable part or portion 222 can be a side support or cushion part, e.g. for an arm or a shoulder of a person or a patient. The profiles 1, 2 for the fixation and locking means 70 of the two parts or portions 111, 222 can be made of e.g. extruded semi-hard PVC. What is important here is that the profiles 1, 2 should have suitable elastic properties allowing for sufficient elasticity or flexibility of the female 12 and male 22 locking parts or sections, so that they will not break easily. The elements of the profiles 1, 2 should also have a sufficient hardness, providing for the firm connection between the two parts or portions 111, 222. Additional suitable materials providing for the desired flexibility and/or hardness can also be used, e.g. other plastic materials. The material of the base profile 1 can be the same as the material of the adjustable profile 2. Alternatively, different materials can be used for each profile. The profiles 1, 2 can be integrated or incorporated onto or into the two parts or portions 111, 222, respectively, wherein the two parts or portions 111, 222 can be made of e.g. polyurethane foam plastic. Other suitable materials for the two parts or portions 111, 222 can also be used.

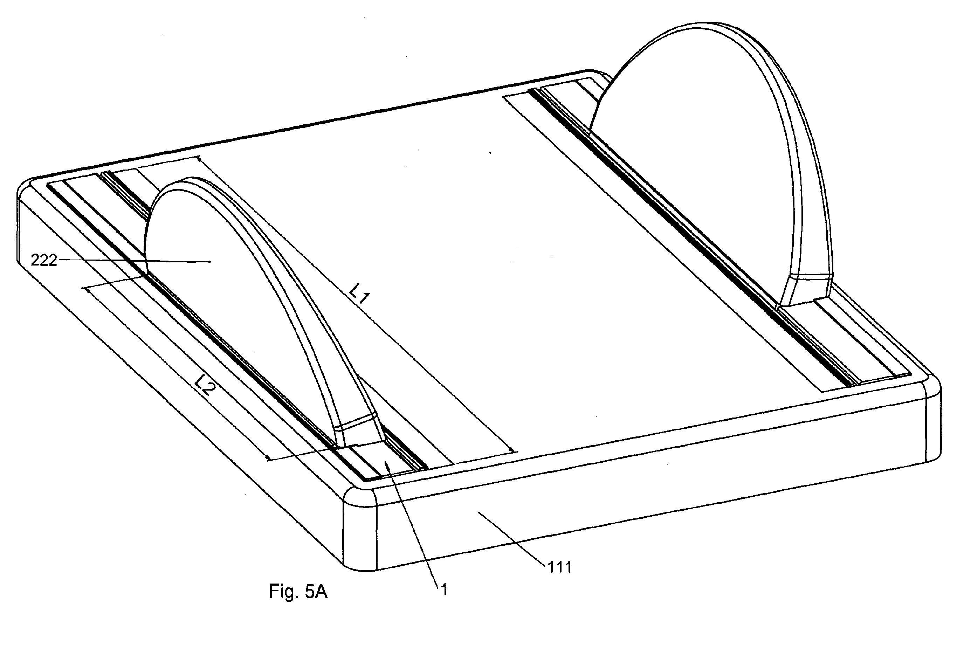

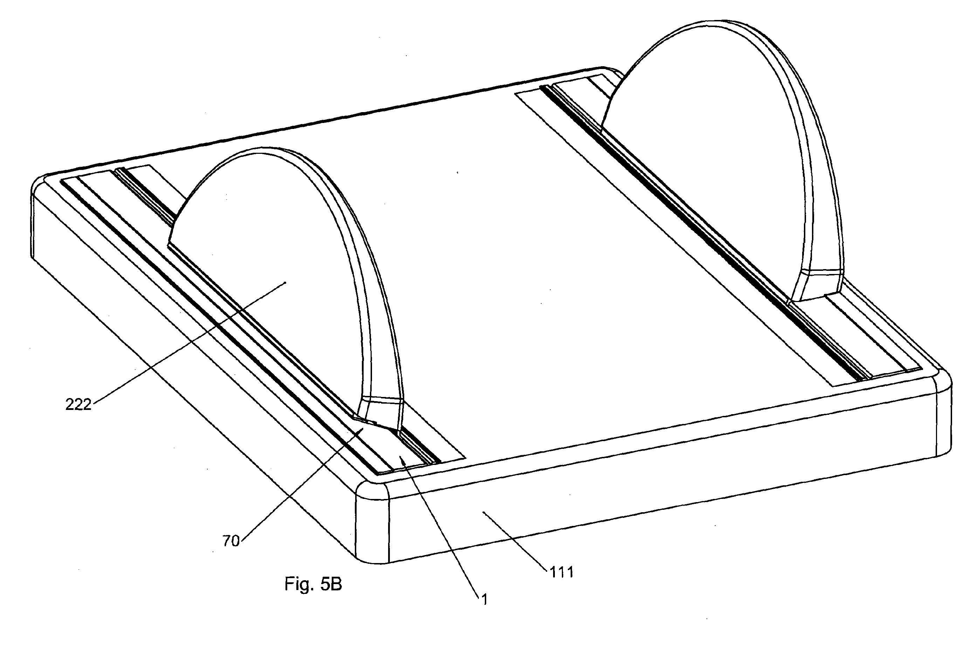

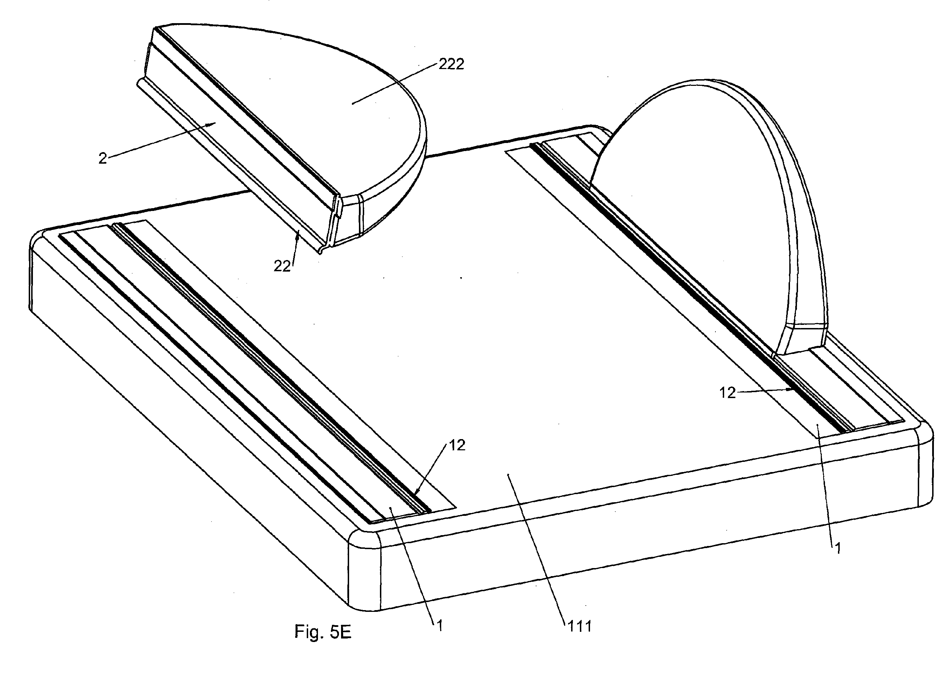

As shown in fig. 5A, the longitudinal base profile 1 can have a chosen length L1 being predetermined or defined by the base part or portion 111, wherein said chosen length L1 is longer or bigger than a certain length L2 of the adjustable longitudinal profile 2, which certain length L2 is being predetermined or defined by the adjustable part or portion 222, and wherein the adjustable longitudinal profile 2 for the adjustable part or portion is firmly fixed or connected to the longitudinal base profile 1 for the base part or portion 111 when in closed position; the adjustable longitudinal profile 2 for the adjustable part or portion 222 being in the longitudinal direction non-stepwise and/or progressively adjustable or movable or slidable in relation to the longitudinal base profile 1 for the base part or portion 111 when in loose or sliding position, as shown in fig. 5B and 5C, thus providing for a non-stepwise or progressively regulation and allowing for numerous positions for the adjustable part or portion 222 in relation to the base part or portion 111; and the adjustable longitudinal profile 2 for the adjustable part or portion 222 being detachable or separated (shown in fig. 5E) from the longitudinal base profile 1 for the base part or portion 111 when in open position, as shown in fig. 5C.

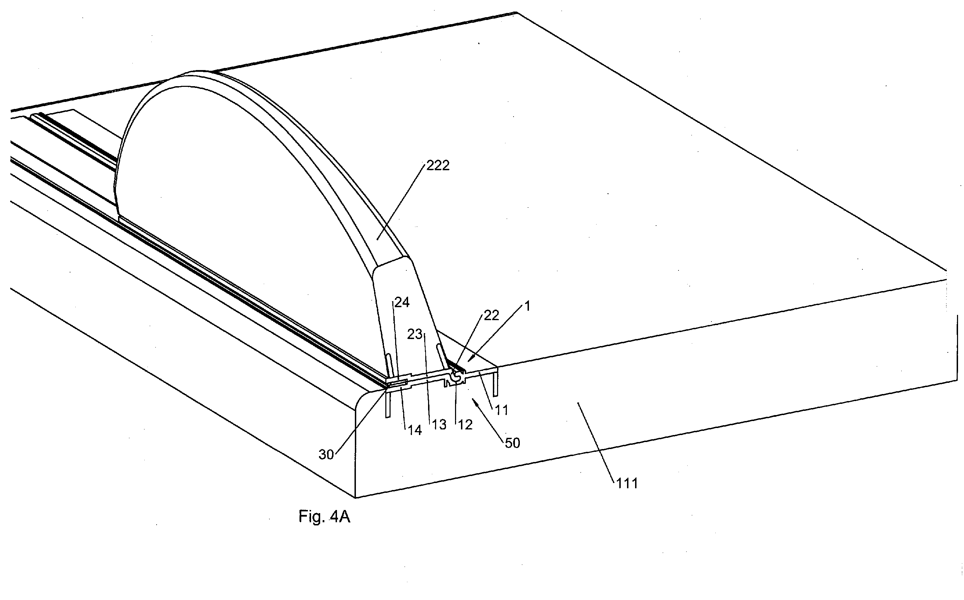

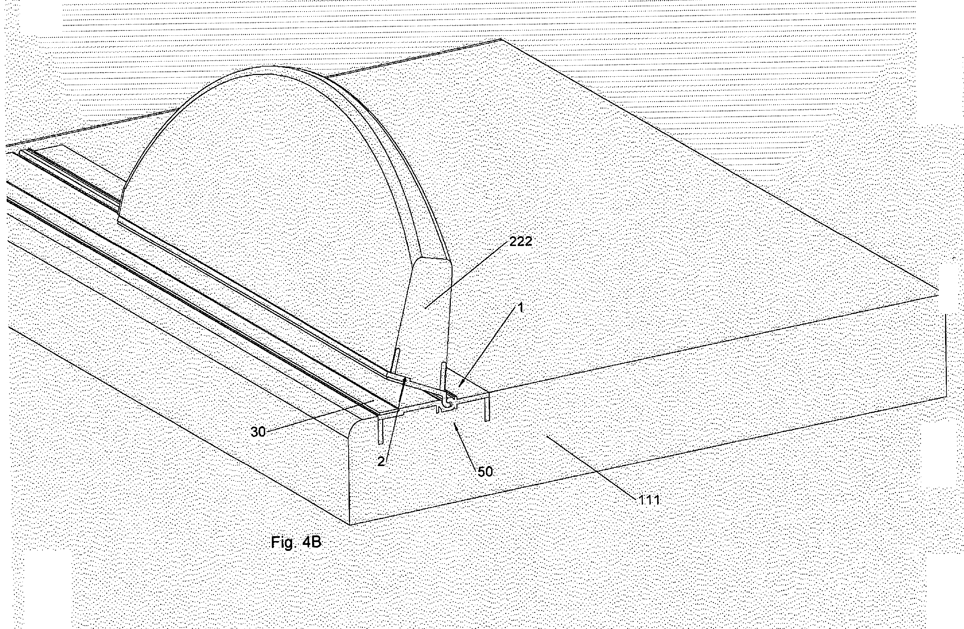

Fig. 4A-4D show in detail and in perspective a cross-sectional view of the different steps or positions for the two parts or portions 111, 222 incorporating the fixation and locking means 70 according to one embodiment of the present invention. For example, in order to slide or move the adjustable part or portion 222 from the position shown in fig. 5A to the position shown in fig. 5D, there are several steps that must be performed. From the closed position shown in fig. 4A, the fixation and locking means 70 should be put in the loose or sliding position shown in fig. 4B in order to non-stepwise and/or progressively move or slide the adjustable part or portion 222 in relation to the base part or portion 111 to the position shown in fig. 5D. When the angle, alpha / α, between the profiles 1, 2, as shown in fig. 4C, is slightly bigger or greater than about 45 degrees, the two parts or portions 111, 222 can be detached or separated from each other. Of course the two parts or portions 111, 222 could also be moved or glided or slid in relation to each other, but then the possibility of getting them 111, 222 separated or detached is quite big. When the angle, alpha / α, between the profiles 1, 2, as shown in fig. 4D, is about 90 degrees or even more, the two parts or portions 111, 222 can be detached or separated from each other quite easily, as shown in fig. 5E.

It should be noted that alternative embodiments, not mentioned herein but falling within the scope of the patent claims, are also to be considered as part of the present invention.

## Claims

1. Furniture element comprising two parts or portions (111, 222) and an adjustable fixation and locking means having sliding hinge means, wherein the fixation or locking means comprises a longitudinal base profile (1) comprising a longitudinal female locking part or section (12) connected to at least one longitudinal plate part or section (11, 13) of the longitudinal base profile (1) and an adjustable longitudinal profile (2) comprising a longitudinal male locking part or section (22) connected to a longitudinal plate part or section (23) of the adjustable longitudinal profile (2), the longitudinal female locking part or section (12) and the longitudinal male locking part or section (22) defining the sliding hinge means wherein the adjustable fixation and locking means have three positions: a locked, a loose or sliding and an open position, wherein the longitudinal base profile (1) has a chosen length (L1) being predetermined or defined by the base part or portion (111), said chosen length (L1) being longer or bigger than a length (L2) of the adjustable longitudinal profile (2) being predetermined or defined by the adjustable part or portion (222), and wherein the adjustable longitudinal profile (2) of the adjustable part or portion (222) is firmly fixed or connected to the longitudinal base profile (1) of the base part or portion(111) when in locked position; the adjustable longitudinal profile (2) of the adjustable part or portion (222) being in the longitudinal direction non-stepwise and/or progressively adjustable or movable or slidable in relation to the longitudinal base profile (1) of the base part or portion (111) when in loose or sliding position thus providing for a non-stepwis and/or progressively regulation and allowing for numerous positions for the adjustable part or portion (222) in relation to the base part or portion (111); and the adjustable longitudinal profile (2) of the adjustable part or portion (222) being detachable or separated from the longitudinal base profile (1) of the base part or portion(111) when in open position, wherein the furniture element further comprises an additional fastening means (30) arranged along the entire longitudinal direction of each respective profile (1, 2) and adapted to facilitate fastening and/or unfastening of the 'two parts or portions (111, 222) preferably without the necessity of any tool or tools.

2. Furniture element according to claim 1, wherein the longitudinal female locking part or section (12) is a groove or recess having a radial cross-section with a substantially J-shape or a shape substantially being in the form of a lower part of a hook; the longitudinal male locking part or section (22) is a tongue having a radial cross-section with a shape substantially corresponding to the shape of the longitudinal female locking part or section (12) and geometrically fittable therein.

3. Furniture element according to claim 1 or 2, wherein the locked, loose or sliding and open positions are defined by the angle (alpha / α) formed between the plate parts or sections (13, 23) of the longitudinal profiles (1, 2) that are facing each other, where the center for the angle is defined by the connected female and male locking parts or sections (12, 22).

4. Furniture element according to claim 3, wherein the locked position is defined when the angle (alpha / a) is substantially about 0 degree; the loose or sliding position is defined when the angle (alpha / α) is substantially between about 0 and about 45 degrees; and the open position is defined when the angle (alpha / a) is substantially bigger or greater than about 45 degrees.

5. Furniture element to any one of claims 1-4, wherein the each other facing plate parts or sections (13, 23) of the longitudinal profiles (1,2) are each having on its end, that is opposite to the sliding hinge means, a recessed part or section (14, 24) providing for sufficient room or space (15, 25) for rooming the additional fastening means (30).

6. Furniture element according to any one of claims 1-5, wherein the additional fastening means is at least one of: Velcro™, zipper, clamps, clips, or the like.

7. Furniture element according to any one of claims 1-6, wherein the male locking part or section (22) is made slightly smaller than the female locking part or section (12) with a negative thickness margin of between about 0,1 and about 0,3 mm, thus facilitating good and easy longitudinal slidability or movability of the adjustable longitudinal profile (2) in relation to the base longitudinal profile (1).

8. Furniture element according to any one of claims 1-7, wherein the top or end part (i) of the male locking part or section (22) is made slightly higher than the corresponding top bottom part (a) of the female locking part or section (12) with a positive margin of between about 0,1 and about 0,3 mm, thus providing for the firm connection between the longitudinal profiles (1, 2) when in locked position.

9. Furniture element according to any one of claims 1-8, wherein the longitudinal profiles (1, 2) are arranged into or onto said two parts or portions (111, 222), e.g. by embedding or casting or moulding or stapling or gluing or screwing or the like, so that with regard to the longitudinal base profile (1) only one face or surface of said at least one longitudinal plate part or section (11, 13) and at least the entry of the longitudinal female locking part or section (12) will be visible; and with regard to the adjustable longitudinal profile (2) only one face or surface of the longitudinal plate part or section (23) and the longitudinal male locking part or section (22) will be visible.

10. Furniture element according to any one of claims 1-9, wherein at least one of the longitudinal profiles (1, 2) further comprise at least one stress-resisting or reinforcement portion (d1, d2, d3) arranged in the connection area between the locking part or section (12, 22) and the longitudinal plate part or section (11, 13, 23), said at least one stress-resisting or reinforcement portion (d1, d2, d3) having a raised area or portion (d1, d2, d3) on at least one side of the longitudinal plate part or section (11, 13, 23), thus providing for the stability and rigidness of the longitudinal profiles (1, 2).

11. Furniture element according to any one of claims 1-10, wherein the longitudinal profiles (1, 2) further comprise at least one supporting part or section (16, 17, 26, 27) being connected to and substantially perpendicular to or having a predetermined angle with at least one longitudinal plate part or section (11, 13, 23), thus providing for the stability and rigidness of the longitudinal profiles (1, 2) of said two parts or portions(111, 222).

12. Furniture element according to claim 11, wherein at least one additional supporting part or section (18, 28) is connected to said at least one supporting part or section (16, 17, 26, 27) forming a closed loop, thus providing for the stability and rigidness of the longitudinal profiles (1, 2) of said two parts or portions(111, 222).

13. Furniture element according to any one of claims 1-12, wherein the two parts or portions (111, 222) and the adjustable fixation or locking means are elements or parts in a furniture product, such as e.g. a chair, sofa, etc., or in a human necessity product, such as e.g. a wheelchair, etc.

## Patentansprüche

1. Möbelelement, umfassend zwei Teile oder Abschnitte (111, 222) und ein anpassbares Befestigungs- und Blockierungsmittel, das Schiebescharniermittel aufweist, wobei das Befestigungs- oder Blockierungsmittel ein längsverlaufendes Basisprofil (1), das einen längsverlaufenden Innenblockierungsteil oder -teilabschnitt (12) umfasst, der mit mindestens einem längsverlaufenden Plattenteil oder - teilabschnitt (11, 13) des längsverlaufenden Basisprofils (1) verbunden ist, und ein anpassbares Längsprofil (2), das einen längsverlaufenden Außenblockierungsteil oder -teilabschnitt (22) umfasst, der mit einem längsverlaufenden Plattenteil oder -teilabschnitt (23) des anpassbaren Längsprofils (2) verbunden ist, umfasst, wobei der längsverlaufende Innenblockierungsteil oder -teilabschnitt (12) und der längsverlaufende Außenblockierungsteil oder -teilabschnitt (22) die Schiebescharniermittel definieren, wobei die anpassbaren Befestigungs- und Blockierungsmittel drei Positionen aufweisen: eine blockierte Position, eine freie oder Schiebeposition und eine offene Position, wobei das längsverlaufende Basisprofil (1) eine gewählte Länge (L1) aufweist, die durch den Basisteil oder -teilabschnitt (111) vorbestimmt oder definiert ist, wobei die gewählte Länge (L1) länger oder größer als eine Länge (L2) des anpassbaren Längsprofils (2) ist, die durch den anpassbaren Teil oder Abschnitt (222) vorbestimmt oder definiert ist, und wobei das anpassbare Längsprofil (2) des anpassbaren Teils oder Abschnitts (222) an dem längsverlaufenden Basisprofil (1) des Basisteils oder -abschnitts (111) fest befestigt oder damit verbunden ist, wenn es sich in der blockierten Position befindet; wobei das anpassbare Längsprofil (2) des anpassbaren Teils oder Abschnitts (222) in Längsrichtung mit Bezug auf das längsverlaufende Basisprofil (1) des Basisteils oder -abschnitts (111) nicht stufenweise und/oder allmählich anpassbar oder bewegbar oder schiebbar ist, wenn es sich in der freien oder Schiebeposition befindet, wodurch eine nicht stufenweise und/oder allmähliche Regulierung bereitgestellt wird und zahlreiche Positionen für den anpassbaren Teil oder Abschnitt (222) mit Bezug auf den Basisteil oder -abschnitt (111) ermöglicht werden; und wobei das anpassbare Längsprofil (2) des anpassbaren Teils oder Abschnitts (222) von dem längsverlaufenden Basisprofil (1) des Basisteils oder - abschnitts (111) abnehmbar oder trennbar ist, wenn es sich in der offenen Position befindet, wobei das Möbelelement ferner ein zusätzliches Befestigungsmittel (30) umfasst, das entlang der gesamten Längsrichtung jedes jeweiligen Profils (1, 2) angeordnet ist und geeignet ist, um das Befestigen und/oder Lösen der beiden Teile oder Abschnitte (111, 222) bevorzugt ohne die Notwendigkeit eines oder mehrerer Werkzeuge zu erleichtern.

2. Möbelelement nach Anspruch 1, wobei der längsverlaufende Innenblockierungsteil oder -teilabschnitt (12) eine Nut oder Vertiefung ist, die einen radialen Querschnitt mit einer wesentlichen J-Form oder einer Form, die im Wesentlichen in Form des unteren Teils eines Hakens vorliegt, aufweist; der längsverlaufende Außenblockierungsteil oder -teilabschnitt (22) eine Feder ist, die einen radialen Querschnitt mit einer Form aufweist, die im Wesentlichen der Form des längsverlaufenden Innenblockierungsteils oder -teilabschnitts (12) entspricht und geometrisch in diesen passt.

3. Möbelelement nach Anspruch 1 oder 2, wobei die blockierten, freien oder Schiebe- und offenen Positionen durch den Winkel (Alpha/α) definiert sind, der zwischen den Plattenteilen oder -teilabschnitten (13, 23) der einander gegenüberstehenden Längsprofile (1, 2) gebildet ist, wobei die Mitte für den Winkel durch die verbundenen Innen- und Außenblockierungsteile oder -teilabschnitte (12, 22) definiert ist.

4. Möbelelement nach Anspruch 3, wobei die blockierte Position definiert ist, wenn der Winkel (Alpha/α) im Wesentlichen ungefähr 0 Grad beträgt; die freie oder Schiebeposition definiert ist, wenn der Winkel (Alpha/α) im Wesentlichen zwischen ungefähr 0 und ungefähr 45 Grad liegt; und die offene Position definiert ist, wenn der Winkel (Alpha/α) im Wesentlichen mehr oder größer als ungefähr 45 Grad ist.

5. Möbelelement nach einem der Ansprüche 1 bis 4, wobei die sich gegenüberstehenden Plattenteile oder -teilabschnitte (13, 23) der Längsprofile (1, 2) jeweils an ihrem Ende, das dem Schiebescharniermittel gegenüberliegt, einen vertieften Teil oder Teilabschnitt (14, 24) aufweisen, der genug Raum oder Platz (15, 25) bereitstellt, um die zusätzlichen Befestigungsmittel (30) unterzubringen.

6. Möbelelement nach einem der Ansprüche 1 bis 5, wobei das zusätzliche Befestigungsmittel mindestens eines ist von: Velcro™, Reißverschluss, Klammern, Klemmen oder dergleichen.

7. Möbelelement nach einem der Ansprüche 1 bis 6, wobei der Außenblockierungsteil oder -teilabschnitt (22) geringfügig kleiner als der Innenblockierungsteil oder -teilabschnitt (12) mit einem negativen Dickenspielraum zwischen ungefähr 0,1 und ungefähr 0,3 mm ausgebildet ist, wodurch eine gute und mühelose Verschiebbarkeit oder Beweglichkeit in Längsrichtung des anpassbaren Längsprofils (2) mit Bezug auf das längsverlaufende Basisprofil (1) ermöglicht wird.

8. Möbelelement nach einem der Ansprüche 1 bis 7, wobei der obere oder Endteil (i) des Außenblockierungsteils oder -teilabschnitts (22) etwas höher als der entsprechende obere Bodenteil (a) des Innenblockierungsteils oder -teilabschnitts (12) mit einem positiven Spielraum zwischen ungefähr 0,1 und ungefähr 0,3 mm ausgebildet ist, wodurch die feste Verbindung zwischen den Längsprofilen (1, 2) bereitgestellt wird, wenn sie sich in der blockierten Position befinden.

9. Möbelelement nach einem der Ansprüche 1 bis 8, wobei die Längsprofile (1, 2) z.B. durch Einbetten oder Gießen oder Formen oder Heften oder Kleben oder Schrauben oder dergleichen in oder auf den beiden Teilen oder Abschnitten (111, 222) angeordnet sind, so dass mit Bezug auf das längsverlaufende Basisprofil (1) nur eine Seite oder Oberfläche des mindestens einen Längsplattenteils oder -teilabschnitts (11, 13) und mindestens der Anfang des längsverlaufenden Innenblockierungsteils oder -teilabschnitts (12) zu sehen sind; und mit Bezug auf das anpassbare Längsprofil (2) nur eine Seite oder Oberfläche des längsverlaufenden Plattenteils oder-teilabschnitts (23) und des längsverlaufenden Außenblockierungsteils oder -teilabschnitts (22) zu sehen sind.

10. Möbelelement nach einem der Ansprüche 1 bis 9, wobei mindestens eines der Längsprofile (1, 2) ferner mindestens einen belastbaren oder Verstärkungsabschnitt (d1, d2, d3) umfasst, der in dem Verbindungsbereich zwischen dem Blockierungsteil oder - teilabschnitt (12, 22) und dem längsverlaufenden Plattenteil oder -teilabschnitt (11, 13, 23) angeordnet ist, wobei der mindestens eine belastbare oder Verstärkungsabschnitt (d1, d2, d3) einen angehobenen Bereich oder Abschnitt (d1, d2, d3) auf mindestens einer Seite des längsverlaufenden Plattenteils oder -teilabschnitts (11, 13, 23) aufweist, wodurch die Stabilität und Steifigkeit der Längsprofile (1, 2) bereitgestellt wird.

11. Möbelelement nach einem der Ansprüche 1 bis 10, wobei die Längsprofile (1, 2) ferner mindestens einen Stützteil oder -teilabschnitt (16, 17, 26, 27) umfassen, der mit mindestens einem längsverlaufenden Plattenteil oder -teilabschnitt (11, 13, 23) verbunden ist und dazu im Wesentlichen rechtwinklig ist oder damit einen vorbestimmten Winkel bildet, wodurch die Stabilität und Steifigkeit der Längsprofile (1, 2) der beiden Teile oder Abschnitte (111, 222) bereitgestellt wird.

12. Möbelelement nach Anspruch 11, wobei mindestens ein zusätzlicher Stützteil oder -teilabschnitt (18, 28) mit dem mindestens einen Stützteil oder -teilabschnitt (16, 17, 26, 27) verbunden ist und einen geschlossenen Kreis bildet, wodurch die Stabilität und Steifigkeit der Längsprofile (1, 2) der beiden Teile oder Abschnitte (111, 222) bereitgestellt wird.

13. Möbelelement nach einem der Ansprüche 1 bis 12, wobei die beiden Teile oder Abschnitte (111, 222) und die anpassbaren Befestigungs- oder Blockierungsmittel Elemente oder Teile in einem Möbelstück, wie beispielsweise in einem Stuhl, einem Sofa usw., oder in einem menschlichen Verbrauchsartikel, wie beispielsweise in einem Rollstuhl usw., sind.

## Revendications

1. Élément de mobilier comprenant deux parties ou portions (111, 222) et un moyen de fixation et de verrouillage ajustable ayant des moyen de charnière coulissante, le moyen de fixation ou de verrouillage comprenant un profil de base longitudinal (1) comportant une partie ou section de verrouillage femelle longitudinale (12) reliée à au moins une partie ou section de plaque longitudinale (11, 13) du profil de base longitudinal (1), et un profil longitudinal ajustable (2) comprenant une partie ou section de verrouillage mâle longitudinale (22) reliée à une partie ou section de plaque longitudinale (23) du profil longitudinal ajustable (2), la partie ou section de verrouillage femelle longitudinale (12) et la partie ou section de verrouillage mâle longitudinale (22) définissant le moyen de charnière coulissante, le moyen de fixation et de verrouillage ajustable ayant trois positions : une position verrouillée, une position lâche ou coulissante et une position ouverte, le profil de base longitudinal (1) ayant une longueur choisie (L1) qui est prédéterminée ou définie par la partie ou portion de base (111), ladite longueur choisie (L1) étant plus longue ou plus grande qu'une longueur (L2) du profil longitudinal ajustable (2) qui est prédéterminée ou définie par la partie ou portion ajustable (222), et le profil longitudinal ajustable (2) de la partie ou portion ajustable (222) est fermement fixé ou relié au profil de base longitudinal (1) de la partie ou portion de base (111) dans la position verrouillée ; le profil longitudinal ajustable (2) de la partie ou portion ajustable (222) qui est dans la direction longitudinale étant ajustable ou mobile ou coulissante de manière continue et/ou progressive par rapport au profil de base longitudinal (1) de la partie ou portion de base (111) dans la position lâche ou coulissante, par conséquent permettant une régulation continue et/ou progressive et autorisant de nombreuses positions pour la partie ou portion ajustable (222) par rapport à la partie ou portion de base (111) ; et le profil longitudinal ajustable (2) de la partie ou portion ajustable (222) étant détachable ou séparé du profil de base longitudinal (1) de la partie ou portion de base (111) dans la position ouverte, l'élément de mobilier comprenant en outre un moyen de fixation supplémentaire (30) disposé le long de toute la direction longitudinale de chaque profil respectif (1, 2) et agencé pour faciliter la fixation et/ou la séparation des deux parties ou portions (111, 222), de préférence sans nécessiter un quelconque outil ou de quelconques outils.

2. Élément de mobilier selon la revendication 1, dans lequel la partie ou section de verrouillage femelle longitudinale (12) est une rainure ou renfoncement ayant une section transversale radiale avec une forme sensiblement de J ou une forme qui est sensiblement sous la forme d'une partie inférieure d'un crochet ; la partie ou section de verrouillage mâle longitudinale (22) est une languette ayant une section transversale radiale avec une forme correspondant sensiblement à la forme de la partie ou section de verrouillage femelle longitudinale (12) et apte à s'adapter géométriquement dans celle-ci.

3. Élément de mobilier selon la revendication 1 ou 2, dans lequel les positions verrouillée, lâche ou coulissante et ouverte sont définies par l'angle (alpha/α) formé entre les parties ou sections de plaque (13, 23) des profils longitudinaux (1, 2) qui se font mutuellement face, le centre pour l'angle étant défini par les parties ou sections de verrouillage femelle et mâle (12, 22) reliées.

4. Élément de mobilier selon la revendication 3, dans lequel la position verrouillée est définie lorsque l'angle (alpha/α) est sensiblement d'environ 0 degré ; la position lâche ou coulissante est définie lorsque l'angle (alpha/α) est sensiblement compris entre environ 0 et environ 45 degrés ; et la position ouverte est définie lorsque l'angle (alpha/α) est sensiblement plus grand ou supérieur à environ 45 degrés.

5. Élément de mobilier selon l'une quelconque des revendications 1 à 4, dans lequel les parties ou sections de plaque en regard l'une de l'autre (13, 23) des profils longitudinaux (1, 2) ont chacune, sur leur extrémité qui est opposée au moyen de charnière coulissante, une partie ou section renfoncée (14, 24) fournissant une place ou un espace suffisant (15, 25) pour loger le moyen de fixation supplémentaire (30).

6. Élément de mobilier selon l'une quelconque des revendications 1 à 5, dans lequel le moyen de fixation supplémentaire est au moins l'un parmi : une bande Velcro™, une fermeture à glissière, des pinces, des attaches ou analogues.

7. Élément de mobilier selon l'une quelconque des revendications 1 à 6, dans lequel la partie ou section de verrouillage mâle (22) est réalisée légèrement plus petite que la partie ou section de verrouillage femelle (12) avec une marge d'épaisseur négative comprise entre environ 0,1 et environ 0,3 mm, facilitant ainsi une capacité de coulissement ou de mouvement longitudinal appropriée et aisée du profil longitudinal ajustable (2) par rapport au profil longitudinal de base (1).

8. Élément de mobilier selon l'une quelconque des revendications 1 à 7, dans lequel la partie supérieure ou d'extrémité (i) de la partie ou section de verrouillage mâle (22) est réalisée légèrement plus haute que la partie supérieure de fond correspondante (a) de la partie ou section de verrouillage femelle (12) avec une marge positive comprise entre environ 0,1 et environ 0,3 mm, permettant ainsi une liaison solide entre les profils longitudinaux (1, 2) dans la position verrouillée.

9. Élément de mobilier selon l'une quelconque des revendications 1 à 8, dans lequel les profils longitudinaux (1, 2) sont disposés dans ou sur lesdites deux parties ou portions (111, 222), par exemple par encastrement ou coulée ou moulage ou agrafage ou collage ou vissage ou analogue, de telle sorte que, par rapport au profil de base longitudinal (1), seule une face ou surface de ladite au moins une partie ou section de plaque longitudinale (11, 13) et au moins l'entrée de la partie ou section de verrouillage femelle longitudinale (12) seront visibles ; et, par rapport au profil longitudinal ajustable (2), seule une face ou surface de la partie ou section de plaque longitudinale (23) et la partie ou section de verrouillage mâle longitudinale (22) seront visibles.

10. Élément de mobilier selon l'une quelconque des revendications 1 à 9, dans lequel au moins l'un des profils longitudinaux (1, 2) comprend en outre au moins une portion de renforcement ou résistant aux contraintes (d1, d2, d3) disposée dans la région de liaison entre la partie ou section de verrouillage (12, 22) et la partie ou section de plaque longitudinale (11, 13, 23), ladite au moins une portion de renforcement ou résistant aux contraintes (d1, d2, d3) ayant une région ou portion surélevée (d1, d2, d3) sur au moins un côté de la partie ou section de plaque longitudinale (11, 13, 23), fournissant ainsi la stabilité et la rigidité aux profils longitudinaux (1, 2).

11. Élément de mobilier selon l'une quelconque des revendications 1 à 10, dans lequel les profils longitudinaux (1, 2) comprennent en outre au moins une partie ou section de support (16, 17, 26, 27) qui est reliée à et sensiblement perpendiculaire à ou formant un angle prédéterminé avec au moins une partie ou section de plaque longitudinale (11, 13, 23), fournissant ainsi la stabilité et la rigidité aux profils longitudinaux (1, 2) desdites deux parties ou portions (111, 222).

12. Élément de mobilier selon la revendication 11, dans lequel au moins une partie ou section de support supplémentaire (18, 28) est reliée à ladite au moins une partie ou section de support (16, 17, 26, 27) formant une boucle fermée, fournissant ainsi la stabilité et la rigidité aux profils longitudinaux (1, 2) desdites deux parties ou portions (111, 222).

13. Élément de mobilier selon l'une quelconque des revendications 1 à 12, dans lequel les deux parties ou portions (111, 222) et le moyen de fixation ou de verrouillage ajustable sont des éléments ou parties dans un produit de mobilier, tel que, par exemple, une chaise, un canapé, etc., ou dans un produit de besoin humain fondamental, tel que, par exemple un fauteuil roulant, etc.
